# EUROPÄISCHE PATENTANMELDUNG

(11) **EP 1 314 630 A2**
(43) Veröffentlichungstag der Anmeldung: **28.05.2003**
(21) Anmeldenummer: 02022318.6
(22) Anmeldetag: 08.10.2002
(51) Int. Cl.: B62D 7/18

(54) **Schwenklager für ein gelenktes Fahrzeugrad**

(30) Priorität: 27.11.2001 DE 10158102
(71) Anmelder: Bayerische Motoren Werke Aktiengesellschaft, 80809 München (DE)
(72) Erfinder: Graf, Thomas, 86633 Neuburg (DE)

(57) **Zusammenfassung**

Die Erfindung betrifft ein Schwenklager für ein gelenktes Fahrzeugrad mit einem einen im wesentlichen kreisförmigen Durchbruch (2) aufweisenden Radnaben-Bereich (1) sowie zumindest einem sich hieran anschließenden Arm (3,4), an dessen freien Ende eine Spurstange oder eine Federbein-Anordnung oder dgl. angelenkt ist. Erfindungsgemäß ist der Arm (3) sich vom freien Ende (3a) aus in zwei Teilarme (3b,3c) verzweigend ausgebildet, die im wesentlichen oberhalb bzw. unterhalb oder allgemein seitlich des Durchbruchs (2) in den Radnaben-Bereich (1) einlaufen und zwischen denen abgesehen vom Radnaben-Bereich (1) sowie vom Bereich des freien Endes (3a) keine Verbindung besteht. Bevorzugt ist der Radnaben-Bereich (1) topfförmig ausgebildet, wobei sich der Durchbruch (2) im Boden dieses Topfes befindet und die Höhe (h) der die Kraft aus den Teilarmen (3b,3c) weiterleitenden Abschnitte (8) der Topfwand im wesentlichen gleich der Tiefe (t) der Teilarme (3b,3c) ist. Dabei ist der Durchbruch (2) von einem umlaufenden Steg (5) des Radnaben-Bereichs (1) umgeben, an welchen Augen (7) für Schraubenbolzen-Bohrungen (6) angeformt sind, wobei die Teilarme (3b,3c) im wesentlichen zu diesen Augen (7) hinlaufen. Dieses Schwenklager ist hinsichtlich mechanischer Beanspruchung und Gewicht optimiert.

## Beschreibung

Die Erfindung betrifft ein Schwenklager für ein gelenktes Fahrzeugrad mit einem einen im wesentlichen kreisförmigen Durchbruch aufweisenden Radnaben-Bereich sowie zumindest einem sich hieran anschließenden Arm, an dessen freien Ende eine Spurstange oder eine Federbein-Anordnung oder dgl. angelenkt ist. Zum technischen Umfeld wird neben der DE 199 23 694 A1 auf die DE-AS 26 24 704 verwiesen.

Schwenklager oder Achsschenkel nach dem Oberbegriff des Anspruchs 1 sind in unterschiedlichen Ausführungsformen bekannt. Stets ist es deren Aufgabe, ein lenkbares Fzg.-Rad verschwenkbar zu halten, weswegen nicht nur eine Federbein-Anordnung oder dgl. mit dem Schwenklager zu verbinden ist, sondern auch eine sog. Spurstange, mit Hilfe derer eine Verschwenk-Lenkbewegung gegenüber der Federbein-Anordnung initiiert wird. Zur Anlenkung der Spurstange sowie der Federbein-Anordnung sind sog. Arme vorgesehen, die vom eigentlichen Tragbereich des Schwenklagers, an den das Fzg.-Rad angeflanscht ist, und der hier als Radnaben-Bereich des Schwenklagers bezeichnet wird, abragen. Der genannte (kreisförmige) Durchbruch im Radnaben-Bereich dient dabei bekanntermaßen zur Aufnahme der Nabe des eigentlichen Radträgers oder Radlagers bzw. zur Durchführung einer Rad-Antriebswelle.

Insbesondere wenn das Fzg.-Rad gegen eine Bordsteinkante oder dgl. gefahren wird, ist der "Befestigungs"-Arm für die Spurstange einer erheblichen mechanischen Belastung ausgesetzt. Aber auch für den "Befestigungs"-Arm der Federbein-Anordnung gibt es außergewöhnlich intensive Belastungsfälle, weshalb diese Arme festigkeitsoptimal und kraftflussoptimiert gestaltet sein sollten. Gleichzeitig soll ein Schwenklager gewichtsoptimiert ausgelegt sein, um die sog. "ungefederten Massen" so gering als möglich zu halten.

Hiermit soll nun ein Schwenklager nach dem Oberbegriff des Anspruchs 1 aufgezeigt werden, das diesen genannten Anforderungen voll gerecht wird (= Aufgabe der vorliegenden Erfindung).

Die Lösung dieser Aufgabe ist dadurch gekennzeichnet, dass der besagte Arm (insbesondere der zumeist als Spurhebel bezeichnete "Befestigungs-Arm" für die Spurstange) sich vom freien Ende aus in zwei Teilarme verzweigend ausgebildet ist, die im wesentlichen oberhalb bzw. unterhalb oder allgemein seitlich des Durchbruchs in den Radnaben-Bereich einlaufen und zwischen denen abgesehen vom Radnaben-Bereich sowie vom Bereich des freien Endes keine Verbindung besteht. Vorteilhafte Aus- und Weiterbildungen sind Inhalt der Unteransprüche.

Indem sich erfindungsgemäß zumindest einer der genannten Arme in sog. Teilarme verzweigend ausgebildet ist, kann die in diesen Arm eingeleitete Kraft optimal in das Schwenklager bzw. in den sog. Radnaben-Bereich desselben eingeleitet werden. Quasi je die Hälfte der jeweils zu übertragenden Kraft wird gezielt in den Bereich oberhalb bzw. unterhalb oder links bzw. rechts oder allgemein auf zwei einander gegenüberliegenden Seiten des genannten Durchbruchs eingeleitet und somit ideal auf den gesamten tragenden Bereich des Schwenklagers bzw. Radnaben-Bereichs aufgeteilt.

Um gleichzeitig das Gewicht des Schwenklagers so gering als möglich zu halten, wird in denjenigen Bereichen des Armes, an denen keine Kraftübertragung erfolgt, überhaupt kein Material vorgesehen, so dass die genanten Teilarme zwischen ihren Endabschnitten, mit denen sie einerseits in den Randnaben-Bereich des Schwenklagers "einlaufen" bzw. andererseits zusammengeführt sind, um die angelenkte Spurstange (oder die angelenkte Federbein-Anordnung) aufzunehmen, voneinander beabstandet sind. In anderen Worten ausgedrückt bedeutet dies, dass zwischen den sog. Teilarmen abgesehen vom Radnaben-Bereich sowie vom Bereich des freien Endes des durch diese Teilarme gebildeten Armes keine Verbindung besteht.

Grundsätzlich bekannten ist eine "topfförmigen" Gestaltung des Radnaben-Bereichs, wobei der sich im Boden des "Topfes" der genannte Durchbruch zur Aufnahme der Radträger-Nabe oder dgl. befindet und die Topf-Wand selbst oder zumindest eine an dieser vorgesehene bzw. von dieser abgehende Rippe die vom genannten Arm bzw. von den genannten Armen eingeleitete Kraft geeignet im Schwenklager weiterleitet. Im Hinblick auf einen optimalen Kraftfluss bei Vermeidung von Spannungsspitzen bzw. von diese erzeugenden Kerben ist es nun besonders günstig, wenn die Höhe der Rippe(n) bzw. derjenigen Abschnitte der Topfwand, die die Kraft aus den besagten Teilarmen weiterleiten, im wesentlichen gleich der Tiefe dieser Teilarme ist. In anderen ausgedrückt bedeutet dies, dass die volle Höhe der kraftleitenden Rippen oder "Topfwand-Abschnitte" zur Kraftübertragung zwischen dem in Teilarme aufgeteilten Arm und dem Radnaben-Bereich genutzt werden kann.

Letztlich erfolgt die Krafteinleitung seitens des Rades in das Schwenklager in demjenigen Abschnitt, in dem der sog. Radträger oder das Radlager am Schwenklager fest anliegt bzw. an diesem befestigt ist. Dieser Abschnitt kann (im wesentlichen wie üblich) in Form eines den besagten Durchbruch umgebenden umlaufenden Stegs ausgebildet sein, an welchen Augen für Schraubenbolzen-Bohrungen angeformt sind. Im Hinblick auf optimierten Kraftfluss sollten dabei die erfindungsgemäßen Teilarme im wesentlichen zu diesen Augen hinlaufen.

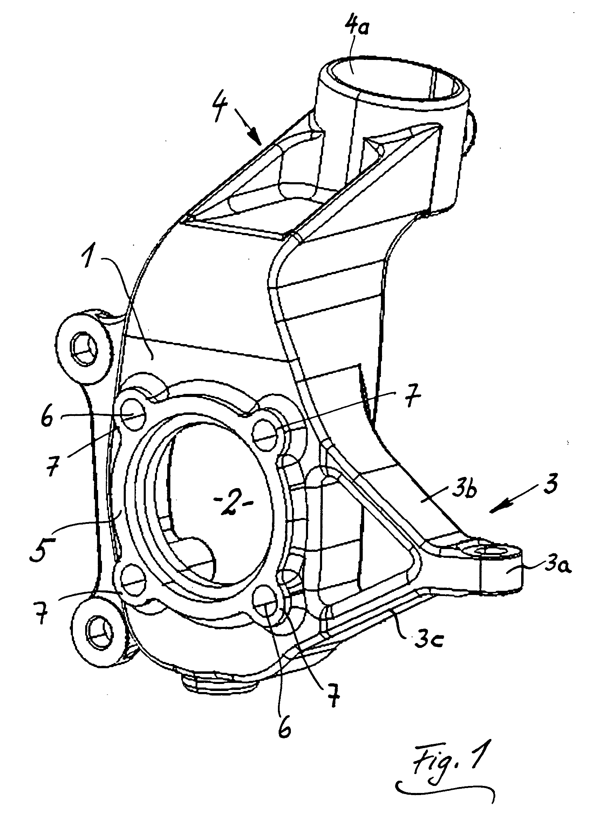

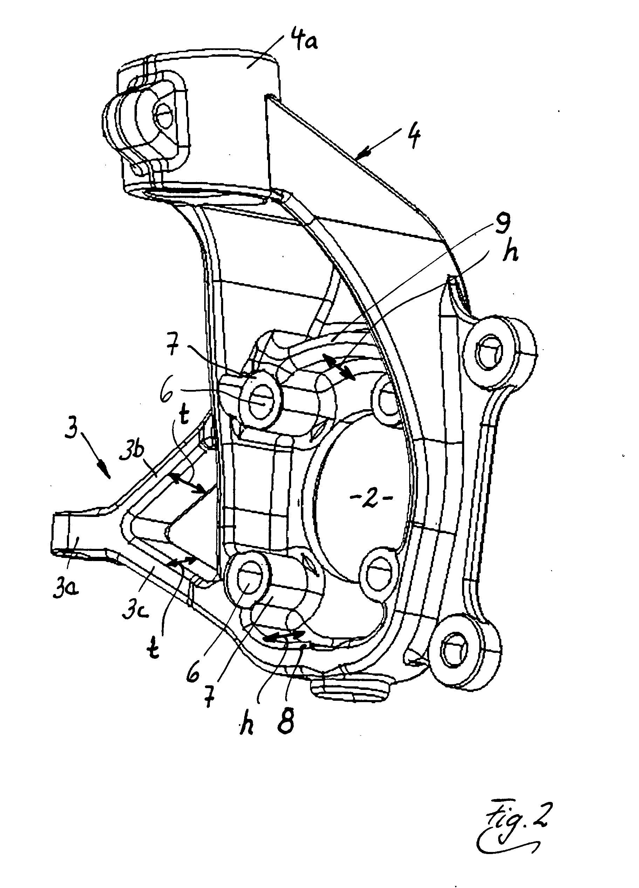

Dies sowie weitere Merkmale und Vorteile gehen auch aus der folgenden Beschreibung eines bevorzugten Ausführungsbeispieles hervor, welches in den beigefügten **Figuren 1 bzw. 2** jeweils räumlich von außen bzw. von innen betrachtet dargestellt ist.

Mit der Bezugsziffer 1 ist der sog. Radnaben-Bereich des dargestellten Schwenklagers für ein lenkbares (Vorder-)Rad eines Kraftfahrzeugs / Personenkraftwagens bezeichnet. An diesem sog. Radnaben-Bereich 1, der im wesentlichen topfförmig ausgebildet ist und in dessen sich außenseitig befindenden "Boden" ein Durchbruch 2 zur Aufnahme der Nabe eines nicht dargestellten Radträgers bzw. Radlagers vorgesehen ist, sind Arme 3, 4 vorgesehen bzw. angeformt. An das freie Ende 3a des mit der Bezugsziffer 3 bezeichneten Armes ist eine nicht dargestellte Spurstange angelenkt, während das freie Ende 4a des Armes 4 zur Aufnahme einer ebenfalls nicht dargestellten Federbein-Anordnung ausgebildet ist. Um das an der Karosserie des zugehörigen, nicht dargestellten Fahrzeugs befestigte Federbein ist das dargestellte Schwenklager über das geeignet gestaltete Ende 4a des Armes 4 verdrehbar, und zwar wie üblich unter Einwirkung der an das Ende 3a des Armes 3 angelenkten Spurstange, die hierfür geeignet in Richtung ihrer Längsachse verschoben wird.

Wie weiter oben erläutert wurde, müssen fallweise relativ hohe Kräfte über den Arm 3 in den Radnaben-Bereich 1 des Schwenklagers übertragen bzw. eingeleitet werden. Im Sinne einer hierauf optimierten sowie gewichtsoptimalen Gestaltung des Armes 3 ist dieser vom freien Ende 3a aus sich in zwei Teilarme 3b, 3c verzweigend ausgebildet. Diese Teilarme 3b, 3c laufen im wesentlichen oberhalb bzw. unterhalb des Durchbruchs 2 in den Radnaben-Bereich 1 ein, wobei zwischen diesen Teilarmen 3b, 3c abgesehen vom Radnaben-Bereich 1 sowie vom Bereich des freien Endes 3a keine Verbindung besteht, d.h. zwischen diesen Teilarmen 3b, 3c befindet sich im Hinblick auf Gewichtsersparnis kein Material.

Zur Optimierung des Kraftflusses im Arm 3 ausgehend von dessen freien Ende 3a, in welchem die beiden Teilarme 3b, 3c zusammengeführt sind, über eben diese Teilarme 3b, 3c in den Radnaben-Bereich 1 des Schwenklagers laufen diese Teilarme 3b, 3c im wesentlichen zu sog. Augen 7 hin, die an einen den Durchbruch 2 umgebenden umlaufenden Steg 5 zur Aufnahme von Schraubenbolzen-Bohrungen 6 angeformt sind. Mit hierin geführten Schraubenbolzen wird das Rad am Schwenklager befestigt. Ebenfalls zur Optimierung des Kraftflusses in den Teilarmen 3b, 3c ist deren Tiefe t, die im wesentlichen senkrecht zum "Boden" des topfförmigen Radnaben-Bereichs 1 gemessen wird, im wesentlichen gleich der Höhe h eines in den Figurendarstellungen untenliegenden Abschnittes 8 der "Topfwand" dieses topfförmigen Radnaben-Bereichs 1 bzw. einer Rippe 9, die im Bereich oberhalb des Durchbruchs 2 die zu beiden Seiten des Durchbruchs 2 vorgesehenen Topfwände miteinander verbindet. Dabei ist die Tiefe "t" des in den Figuren oberen Teilarmes 3b im wesentlichen gleich der Höhe der Rippe 9, welche die Kraft aus dem Teilarm 3b weiterleitet, und die Tiefe "t" des in den Figuren unteren Teilarmes 3c ist im wesentlichen gleich der Höhe des Abschnittes 8 der Topfwand, welcher die Kraft aus dem Teilarm 3b weiterleitet.

Mit der gezeigten und beschriebenen Gestaltung eines Schwenklagers für ein gelenktes Fahrzeugrad ergibt sich auch in extremen Belastungsfällen eine günstige Verteilung der im Schwenklagermaterial auftretenden mechanischen Spannungen, und zwar unabhängig davon, ob dieses Schwenklager als Gussteil oder als Schmiedeteil ausgebildet ist. Aufgrund dieser spannungsoptimierten Gestaltung und gleichzeitiger Umsetzung von Leichtbauweise kann neben Stahl bzw. GGG sogar eine Leichtmetalllegierung als Material zum Einsatz kommen. Dabei kann abweichend vom gezeigten Ausführungsbeispiel auch der andere Arm 4 weiter gewichtsoptimiert, d.h. in Form zweier abschnittsweise vollständig voneinander getrennter Teilarme ausgebildet sein, wie überhaupt eine Vielzahl von Details insbesondere konstruktiver Art durchaus abweichend vom gezeigten Ausführungsbeispiel gestaltet sein kann, ohne den Inhalt der Patentansprüche zu verlassen.

## Patentansprüche

1. Schwenklager für ein gelenktes Fahrzeugrad mit einem einen im wesentlichen kreisförmigen Durchbruch (2) aufweisenden Radnaben-Bereich (1) sowie zumindest einem sich hieran anschließenden Arm (3, 4), an dessen freien Ende eine Spurstange oder eine Federbein-Anordnung oder dgl. angelenkt ist,
**dadurch gekennzeichnet, dass** der Arm (3) sich vom freien Ende (3a) aus in zwei Teilarme (3b, 3c) verzweigend ausgebildet ist, die im wesentlichen oberhalb bzw. unterhalb oder allgemein seitlich des Durchbruchs (2) in den Radnaben-Bereich (1) einlaufen und zwischen denen abgesehen vom Radnaben-Bereich (1) sowie vom Bereich des freien Endes (3a) keine Verbindung besteht.

2. Schwenklager nach Anspruch 1,
**dadurch gekennzeichnet, dass** der Radnaben-Bereich (1) topfförmig ausgebildet ist, wobei sich der Durchbruch (2) im Boden dieses Topfes befindet und die Höhe (h) eines die Kraft aus einem Teilarm (3b, 3c) weiterleitenden Abschnittes (8) der Topfwand oder einer von dieser abgehenden Rippe (9) im wesentlichen gleich der Tiefe (t) des zugeordneten Teilarmes (3b, 3c) ist.

3. Schwenklager nach Anspruch 1 oder 2,
**dadurch gekennzeichnet, dass** der Durchbruch (2) von einem umlaufenden Steg (5) des Radnaben-Bereichs (1) umgeben ist, an welchen Augen (7) für Schraubenbolzen-Bohrungen (6) angeformt sind, wobei die Teilarme (3b, 3c) im wesentlichen zu diesen Augen (7) hinlaufen.

4. Schwenklager nach einem der vorangegangenen Ansprüche,
**dadurch gekennzeichnet, dass** dieses als Schmiede- oder Gussteil in Stahl oder einer Leichtmetalllegierung ausgebildet ist.
